# EUROPÄISCHE PATENTANMELDUNG

(11) **EP 4 762 911 A1**
(43) Veröffentlichungstag der Anmeldung: **24.06.2026**
(21) Anmeldenummer: 25211943.3
(22) Anmeldetag: 29.10.2025
(51) Int. Cl.: A01D 41/14, A01D 57/04

(54) **VERFAHREN ZUR AUTOMATISCHEN HÖHENSTEUERUNG EINER HASPEL EINES VORSATZGERÄTES**

(30) Priorität: 18.12.2024 DE 102024138708
(71) Anmelder: CLAAS Selbstfahrende Erntemaschinen GmbH, 33428 Harsewinkel (DE)
(72) Erfinder: Spiekermann, Sebastian, 48346 Ostbevern (DE); Thiesmann, Waldemar, 49080 Osnabrück (DE); Irmer, Daniel, 33442 Herzebock-Clarholz (DE); Bormann, Bastian, 33334 Gütersloh (DE)
(74) Vertreter: CLAAS Gruppe

(57) **Zusammenfassung**

Die vorliegende Erfindung betrifft ein Verfahren zur automatischen Höhensteuerung einer in vertikaler und horizontaler Richtung verstellbaren Haspel (6) eines Vorsatzgerätes (4) für einen selbstfahrenden Mähdrescher (1), wobei in Abhängigkeit von einer durch zumindest eine Sensorvorrichtung (14) vorausschauend detektierten Bestandshöhe (B) eines Bestands (2) und Auswertung von die Bestandshöhe (B) wiedergebenden Signalen durch eine Datenverarbeitungsvorrichtung (16) eine eingestellte Haspelhöhe (h) adaptiert wird, wobei zur automatischen Höhensteuerung ein Oberflächenprofil (13) des Bestands (2) vorausschauend detektiert wird, dass das Oberflächenprofil (13) wiedergebende Signale zur Bestimmung zumindest zweier Quantile, eines unteren Quantils (Qu) und eines oberen Quantils (Qo), der der Datenverarbeitungsvorrichtung (16) zur Durchführung einer statistischen Analyse zugeführt werden, und dass die Anpassung der einzustellenden Haspelhöhe (h) in Abhängigkeit vom Quantilsabstand (QR) der zumindest zwei Quantile (Qu, Qo) bestimmt wird.

## Beschreibung

Die vorliegende Erfindung betrifft ein Verfahren zur automatischen Höhensteuerung einer Haspel eines Vorsatzgerätes für einen Mähdrescher. Weiterhin ist ein selbstfahrender Mähdrescher gemäß dem Anspruch 15 Gegenstand der vorliegenden Erfindung.

Aus der DE 10 2016 118 637 A1 ist ein Verfahren zur automatischen Höhensteuerung einer Haspel eines Schneidwerks für einen Mähdrescher bekannt. Mittels einer Sensorvorrichtung wird vorausschauend eine Bestandshöhe eines Erntegutbestands detektiert. Durch eine Datenverarbeitungsvorrichtung werden die Bestandshöhe wiedergebende Signale ausgewertet, um die tatsächliche Bestandshöhe zu bestimmen. In Abhängigkeit von der tatsächlichen Bestandshöhe wird eine optimale Haspelhöhe bestimmt, die zur fortlaufenden Adaption der in Abhängigkeit von dem zu erntenden Erntegut eingestellten Haspelhöhe verwendet wird. Als Bestandshöhe wird die Höhe des Erntegutes gemessen vom Boden aus bezeichnet. Erfasst wird die Bestandshöhe zumindest über die Breite des Schneidwerks und in Fahrtrichtung vor dem Mähdrescher. Aufgrund der über die Schneidwerksbreite konstanten Höhe der Haspel wird bei einem über die Schneidwerksbreite ungleichmäßigen Verlauf der tatsächlichen Bestandshöhe ein Mittelwert der Bestandshöhe des Erntegutes über die Schneidwerksbreite für die Berechnung der optimalen Haspelhöhe genutzt.

Die Verwendung des Mittelwertes für die Bestandshöhe ist dazu vorgesehen, dass der Haspeleingriff, d.h. der Differenzabstand zwischen der optimalen Haspelhöhe und der Bestandsoberkante, die auch als Ährenhorizont bezeichnet wird, konstant gehalten wird. Der konstante Haspeleingriff führt, abhängig von Ernte- und Umgebungsbedingungen, zu Ernteverlusten, wenn der Haspeleingriff auf Grund der Höhensteuerung für die Erntegutart zu intensiv oder zur Erzielung der Zuführ- und Transportfunktion nicht ausreichend ist. Die Verwendung des Mittelwertes für die Bestandshöhe berücksichtigt auch kleine Feldbereiche mit niedrigem Bestand, so dass die auf diesen Feldbereichen detektierten Bestandshöhen ebenfalls in die Mittelwertbildung einfließen. Dies führt dazu, dass sich die Haspel leicht senkt und sie im Feldbereich mit höheren Beständen durch den Bestand kämmt, während sie in Feldbereichen mit niedrigeren Beständen trotz der Anpassung noch keinen Eingriff mit dem Erntegut hat.

Ausgehend vom vorstehend genannten Stand der Technik liegt der Erfindung die Aufgabe zugrunde, ein Verfahren der eingangs genannten Art weiterzubilden, welches eine voreingestellte Haspelhöhe als Reaktion auf eine sich verändernde Bestandssituation automatisch anpasst, um einen optimierten Haspeleingriff zu erreichen.

Die vorliegende Aufgabe wird durch ein Verfahren zur automatischen Höhensteuerung einer Haspel eines Vorsatzgerätes mit den Merkmalen des Anspruches 1 gelöst. Weiterhin wird die Aufgabe durch einen selbstfahrenden Mähdrescher mit den Merkmalen des nebengeordneten Anspruches 15 gelöst. Vorteilhafte Weiterbildungen sind Gegenstand der abhängigen Ansprüche.

Gemäß dem Anspruch 1 wird ein Verfahren zur automatischen Höhensteuerung einer in vertikaler und horizontaler Richtung verstellbaren Haspel eines Vorsatzgerätes für einen selbstfahrenden Mähdrescher vorgeschlagen, wobei in Abhängigkeit von einer durch zumindest eine Sensorvorrichtung vorausschauend detektierten Bestandshöhe eines Bestands und Auswertung von die Bestandshöhe wiedergebenden Signalen durch eine Datenverarbeitungsvorrichtung eine eingestellte Haspelhöhe adaptiert wird. Erfindungsgemäß ist vorgesehen, dass zur automatischen Höhensteuerung ein Oberflächenprofil des Bestands vorausschauend detektiert wird, dass das Oberflächenprofil wiedergebende Signale zur Bestimmung zumindest zweier Quantile, zumindest eines unteren Quantils und zumindest eines oberen Quantils, der Datenverarbeitungsvorrichtung zur Durchführung einer statistische Analyse zugeführt werden, und dass die Anpassung der einzustellenden Haspelhöhe in Abhängigkeit vom Quantilsabstand der zumindest zwei Quantile bestimmt wird.

Die Anpassung der einzustellenden Haspelhöhe in Abhängigkeit vom ermittelten Quantilsabstand bildet das im Vorfeld des Vorsatzgerätes detektierte Oberflächenprofil des abzuerntenden Bestands präziser ab als dies durch den im Stand der Technik verwendeten Mittelwert der Fall ist. Das Oberflächenprofil des Bestands, auch als Ährenhorizontprofil bezeichnet, lässt sich mithilfe der zumindest einen Sensorvorrichtung ermitteln und die Beschaffenheit bzw. die Unebenheit des Bestandes durch die zumindest zwei Quantile beschreiben. Die Bestimmung des Quantilsabstands gibt Aufschluss darüber, wie die Bestandshöhen vor dem Vorsatzgerät respektive dem selbstfahrenden Mähdrescher verteilt sind. Auf diese Weise lässt sich die Führungsgröße, welche der Haspelhöhensteuerung zugrunde liegt, situativ anpassen. So reagiert die Haspelhöhensteuerung beispielsweise nicht unmittelbar auf Bereiche niedriger oder niedrigerer Bestandshöhe mit einer Absenkung der Haspelhöhe, sondern gewichtet den Einfluss der detektierten Bestandshöhenverteilung.

Das erfindungsgemäße Verfahren vermeidet den Nachteil des aus der DE 10 2016 118 637 A1 bekannten Verfahrens, dass die einzustellende Haspelhöhe in Abhängigkeit vom Mittelwert der im Vorfeld detektierten Bestandshöhe eingestellt wird. In die gleitende Mittelwertbildung gemäß dem Verfahren nach DE 10 2016 118 637 A1 fließen auch niedrige Bestandshöhen in kleineren räumlichen Bereichen vor dem Vorsatzgerät ein, welche die mittelwertabhängige Haspelhöhensteuerung mitbeeinflussen. Dies führt dazu, dass die Haspelhöhe gegenüber dem Mittelwert für die Bestandshöhe geringfügiger abgesenkt wird, als es die unebenen Bestandsbedingungen erfordern. Dies führt in den Bereichen mit den hohen Beständen zu einem "Kämmen" der Haspel durch den Bestand und in den Bereichen mit den niedrigen Beständen steht die Haspel gleichzeitig zu hoch, sodass die Haspel im Bereich der niedrigeren Bestände immer noch keinen Eingriff hat.

Die zumindest eine Sensorvorrichtung zur Vorfelddetektion kann z.B. als Lidar, Radar und/oder Kamera ausgebildet sein.

Insbesondere kann in Abhängigkeit vom Überschreiten zumindest eines Schwellwertes für den Quantilsabstand die Anpassung der einzustellenden Haspelhöhe angesteuert werden. Durch den zumindest einen Schwellwert für den Quantilsabstand kann eine Vorgabe erfolgen, wann das Oberflächenprofil des Bestands als uneben eingestuft wird.

Bevorzugt kann dem oberen Quantil ein Quantilwert zugewiesen sein, der oberhalb eines 50%-Quantils liegt, und dem unteren Quantil kann ein Quantilwert zugewiesen sein, der unterhalb des 50%-Quantils liegt. Das 50%-Quantil entspricht einem Mittelwert der detektierten Bestandshöhe, während das obere Quantil und das untere Quantil statistische Verteilungsgrenzen der einzelnen Bestandshöhen bilden. Bevorzugt kann das zumindest eine obere Quantile beispielsweise ein 90%-Quantil und das zumindest eine untere Quantil beispielsweise ein 30%-Quantil sein.

Gemäß einer Weitebildung kann der zumindest eine Schwellwert für den Quantilsabstand manuell, insbesondere durch eine Eingabe mittels einer Benutzerschnittstelle, oder automatisiert durch Datenverarbeitungsvorrichtung, insbesondere durch ein der Datenverarbeitungsvorrichtung zugeordnetes Maschinenlernmodell, angepasst werden.

Insbesondere ermöglicht eine manuelle Eingabe des zumindest einen Schwellwertes für den Quantilsabstand mittels der Benutzerschnittstelle eine Anpassung des zumindest einen Schwellwertes an die individuellen Wünsche des Bedieners des Mähdreschers.

Alternativ kann die Bestimmung des zumindest einen Schwellwertes durch einen in der Datenverarbeitungsvorrichtung hinterlegten oder hinterlegbaren Algorithmus erfolgen, welcher den zumindest einen Schwellwert für den Quantilsabstand durch maschinelles Lernen bestimmt und anpasst.

Bevorzugt kann die Anpassung der Haspelhöhe in Abhängigkeit von zumindest einer Erntebedingung durchgeführt werden, wobei die zumindest eine Erntebedingung aus der Gruppe Lagergetreidebereich, Lagergetreideintensität, Lagerorientierung, Bestandsdichte und/oder Geländetopologie ist. Dabei beschreibt der Lagergetreidebereich die Lage, Form und/oder Ausdehnung des Bereichs mit Lagergetreide innerhalb des abzuerntenden Bestands, der sich innerhalb des Detektionsbereichs der zumindest einen Sensorvorrichtung befindet. Eine geringe Bestandsdichte kann ebenfalls die Bestandshöhe des aufzunehmenden Erntegutes beeinflussen.

Gemäß einer bevorzugten Weiterbildung kann ein Offsetwert für die eingestellte Haspelhöhe bestimmt und auf die eingestellte Haspelhöhe angewendet werden, um in Abhängigkeit von der Haspelhöhe die Intensität eines Haspeleingriffs einzustellen. Eine Absenkung der Haspelhöhe aufgrund von im Vorfeld detektierter niedriger Bestandshöhen kann zu einer temporären Reduzierung der Haspelhöhe um den Offsetwert führen, um die Intensität des Haspeleingriffs zu verstärken. Eine Anhebung der Haspelhöhe aufgrund von Bestandshöhen, die signifikant vom 50%-Quantil nach oben abweichen, kann zu einer temporären Erhöhung der bestimmten Haspelhöhe um den daraus abgeleiteten Offsetwert führen, um die Intensität des Haspeleingriffs zu verringern.

Des Weiteren kann die Einstellung des Haspeleingriffs in Abhängigkeit von zumindest einer der Erntebedingungen durchgeführt werden. So kann in Abhängigkeit von zumindest einer Erntebedingung aus der Gruppe Lagergetreidebereich, Lagergetreideintensität, Lagerorientierung, Bestandsdichte und/oder Geländetopologie der Offsetwert auf die bestimmte Haspelhöhe aufaddiert oder von dieser subtrahiert werden, um die Intensität des Haspeleingriffs zu reduzieren oder zu verstärken.

Weiter bevorzugt kann der Haspeleingriff in Abhängigkeit von einer durch einen Neigungssensor detektierten Neigung des Vorsatzgerätes verändert werden. Dadurch kann insbesondere bei einer Neigung des Vorsatzgerätes, die sich bei einer Berg- oder Talfahrt einstellt, der Haspeleingriff durch die automatische Veränderung der Haspelhöhe angepasst werden. In der beispielhaft genannten Situation der Talfahrt ist es sinnvoll, den Haspeleingriff geringfügig zu verstärken, so dass aufrechtstehende, höhere Pflanzen aktiver dem Vorsatzgerät zugeführt und von diesem aufgenommen sowie besser an Förderorgane des Vorsatzgerätes gedrückt werden. Eine Berg- oder Talfahrt kann beispielsweise durch einen dem Mähdrescher zugeordneten Neigungssensor detektiert werden, der Daten an die Datenverarbeitungsvorrichtung übermittelt.

Zur Beurteilung der Gleichmäßigkeit des Oberflächenprofils können der Quantilsabstand zwischen dem oberen Quantil und dem unteren Quantil bestimmt und mit dem zumindest einen Schwellwert für den Quantilsabstand verglichen werden.

Bevorzugt kann bei einer im Wesentlichen gleichen Bestandshöhe, bei welcher der Quantilsabstand innerhalb eines durch zwei Grenzwerte begrenzten Toleranzbandes um das 50%-Quantil liegt, das 50%-Quantil, das untere Quantil oder das obere Quantil zur Anpassung der einzustellenden Haspelhöhe verwendet werden. Bei einer im Wesentlichen gleichen Bestandshöhe ist eine Anpassung der Haspelhöhe nicht erforderlich, so dass diese bevorzugt auf Basis des 50%-Quantils gehalten wird. Die Breite des Toleranzbandes um das 50%-Quantil kann dabei derart gewählt sein, dass die Ansteuerung der Haspelhöhe auch auf Basis des unteren Quantils oder des oberen Quantils erfolgen kann.

Gemäß einer bevorzugten Weiterbildung kann bei einem Überschreiten des zumindest einen Schwellwertes für den Quantilsabstand zwischen dem oberen Quantil und dem unteren Quantil ein oberer Quantilsabstand zwischen dem oberen Quantil und dem 50%-Quantil mit einem unteren Quantilsabstand zwischen dem 50%-Quantil und dem unteren Quantil verglichen werden. Das Überschreiten des zumindest einen Schwellwertes für den Quantilsabstand zwischen dem oberen Quantil und dem unteren Quantil ist ein Indikator für die Unebenheit des Bestands. Das Bestimmen des oberen Quantilsabstands und des unteren Quantilsabstands durch die Datenverarbeitungsvorrichtung kann dabei einer Fallunterscheidung dienen, um zwischen signifikanten Änderungen des Oberflächenprofils des Bestands differenzieren zu können.

Dabei kann aus dem Vergleich des oberen Quantilsabstands, der Differenz zwischen dem oberen Quantil und dem 50%-Quantil, mit dem unteren Quantilsabstand, der Differenz zwischen dem 50%-Quantil und dem unteren Quantil, auf die Gleichmäßigkeit des Oberflächenprofils des Bestands geschlossen werden. Es kann somit eine Fallunterscheidung vorgenommen werden, durch welche für die automatische Anpassung der Haspelhöhe zwischen dem Fall des Vorliegens einer im Wesentlichen gleichmäßigen Bestandshöhe, dem Fall des Auftretens von einem oder mehreren Bereichen mit im Wesentlichen kleinteiligen Lagergetreide und dem Fall des Auftretens von einem oder mehreren Bereichen mit im Wesentlichen großflächigen Lagergetreide unterschieden und der jeweilige Fall berücksichtigt wird.

Insbesondere können bei einem Überschreiten des Schwellwertes für den Quantilsabstand der obere Quantilsabstand und der untere Quantilsabstand miteinander verglichen werden, wobei bei einer annähernd gleichen Größe des oberen Quantilsabstands und des unteren Quantilsabstands das untere Quantil zur Anpassung der einzustellenden Haspelhöhe verwendet wird. Das Vorliegen eines großflächigen Lagergetreidebereichs kann dabei durch die im Wesentlichen ähnlich große Quantilsabstände zwischen dem oberen Quantil und dem 50%-Quantil einerseits und dem 50%-Quantil und dem unteren Quantil andererseits charakterisiert werden. Eine annähernd gleichgroße Differenz zwischen dem oberen Quantil und dem 50%-Quantil sowie dem 50%-Quantil und dem unteren Quantil deutet auf sehr unebene Bestände hin, die eine Anpassung der Haspelhöhe und/oder des Haspeleingriffs erfordern. Insbesondere muss die Haspel bis zum Lagergetreide abgesenkt werden, um die Aufnahme und Förderung zu unterstützen. Als vorteilhaft hat sich dabei die Verwendung des unteren Quantils, insbesondere eines Quantils von ca. 30% erwiesen.

Insbesondere kann bei einem Überschreiten eines weiteren Schwellwertes durch den bestimmten unteren Quantilsabstand das obere Quantil zur Anpassung der einzustellenden Haspelhöhe verwendet werden. Der den weiteren Schwellwert überschreitende untere Quantilsabstand, der sich dabei durch die größere Differenz zwischen dem 50%-Quantil und dem unteren Quantil gegenüber der Differenz zwischen dem oberen Quantil und dem 50%-Quantil ergibt, kann die Kleinteiligkeit der abzuerntenden Fläche mit Lagergetreide charakterisieren. Eine Anpassung der Haspelhöhe ist in einem solchen Fall nicht notwendig, da das kleinteilige Lagergetreide im Allgemeinen vom umgrenzenden stehenden Getreide mitgefördert wird. Dabei kann, um nicht auf das kleinteilige Lagergetreide reagieren zu müssen, die Haspelhöhe auf dem Niveau des oberen Quantils verbleiben. Als vorteilhaft hat sich dabei die Verwendung des oberen Quantils, insbesondere eines Quantils von ca. 90% erwiesen.

Die eingangs gestellte Aufgabe wird zudem durch einen selbstfahrenden Mähdrescher gemäß dem nebengeordneten Anspruch 15 gelöst. Auf alle Ausführungen zu dem vorschlagsgemäßen zur automatischen Höhensteuerung einer Haspel eines Vorsatzgerätes darf verwiesen werden.

Durch die automatische Anpassung der Haspelhöhe bei unterschiedlichen Umgebungsbedingungen, wie unebenem Bestand, dem Auftreten von Lagergetreide, schwankender Bestandsdichte, Geländetopologie oder dergleichen, kann der Fahrer des Mähdreschers davon entlastet werden, in solchen Situationen manuell in die Haspelsteuerung eingreifen zu müssen, um die optimale Haspelhöhe und damit auch den optimalen Haspeleingriff vorzugeben.

Die vorliegende Erfindung wird nachstehend anhand eines in den Zeichnungen dargestellten Ausführungsbeispieles näher erläutert.

Es zeigen:
- Fig. 1: schematisch und exemplarisch eine Teilansicht eines selbstfahrenden Mähdreschers;
- Fig. 2: schematisch und exemplarisch eine Darstellung einer Bestandshöhenverteilung eines von einer Sensorvorrichtung im Vorfeld des Mähdreschers zu detektierenden Bestands;

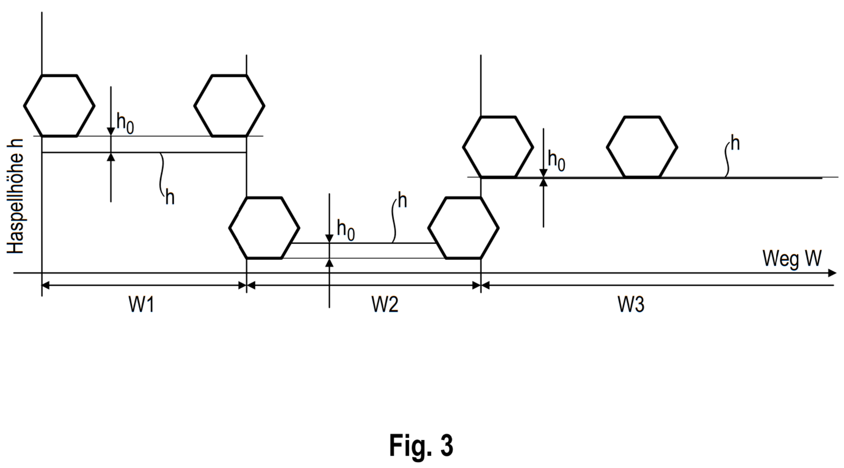

- Fig. 3: exemplarisch einen Verlauf einer adaptiven Einstellung einer Haspelhöhe; und
- Fig. 4: exemplarisch ein Ablaufdiagramm einer automatischen Haspelhöhensteuerung.

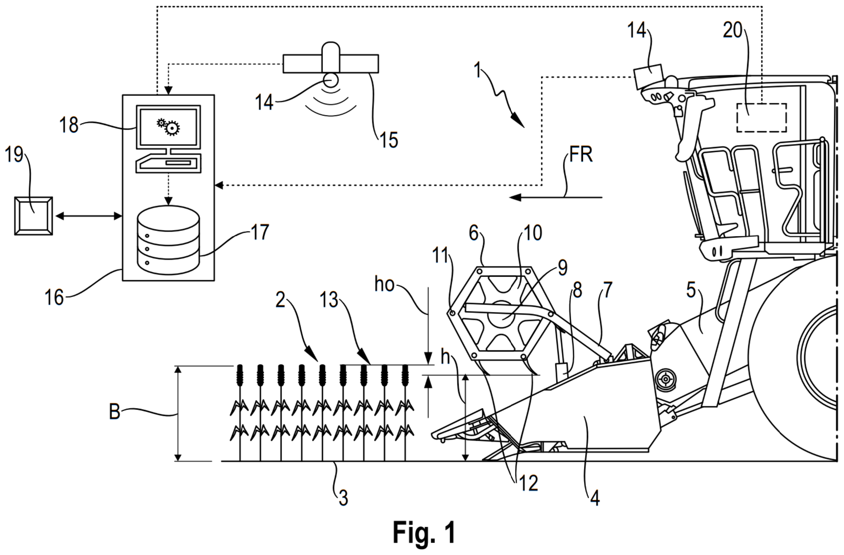

In Fig. 1 ist schematisch und exemplarisch eine Teilansicht eines selbstfahrenden Mähdreschers 1 dargestellt. Zur Aufnahme eines auf einem Feld 3 befindlichen Bestands 2 mit Erntegut weist der Mähdrescher 1 ein als Schneidwerk ausgeführtes Vorsatzgerät 4 auf. Das Vorsatzgerät 4 ist an einem Einzugskanal 5 des Mähdreschers 1 höhenverstellbar angeordnet. Durch einen Schrägförderer im Einzugskanal 5 gelangt vom Vorsatzgerät 4 aufgenommenes Erntegut zur weiteren Bearbeitung zu den - nicht dargestellten - Arbeitsorganen des Mähdreschers 1.

Das als Schneidwerk ausgeführte Vorsatzgerät 4 weist einen Schneidwerkstisch auf, der in seiner Ausfahrlänge verstellbar sein kann. Eine Haspel 6 ist an Haspeltragarmen 7 um eine Haspelachse drehbar gelagert. Die Haspeltragarme 7 sind mittels Linearaktoren 8 höhenverstellbar. Die Haspel 6 für das Vorsatzgerät 4 umfasst ein Haspeltragrohr 9 mit darauf angeordneten Haspelsternen 10, an deren Sternarmen sich parallel zu dem Haspeltragrohr 9 erstreckende Zinkenstangen 11 angeordnet sind. An den Zinkenstangen 11 sind eine Vielzahl von Haspelzinken 12 angeordnet. Die an den Zinkenstangen 11 angeordneten Haspelzinken 12 sind über die Breite und gleichmäßig in Haspeldrehrichtung um die Haspelachse verteilt angeordnet. Die Darstellung in Fig. 1 zeigt exemplarisch nur zwei der an den Zinkenstangen 11 angeordneten Haspelzinken 12.

Die Haspelzinken 12 sind dafür vorgesehen, bei einem Drehen der Haspel 6 um die Haspelachse in den Bestand 2 einzutauchen und das Erntegut dadurch zum Schneidwerkstisch hin, das heißt gegen die Fahrtrichtung FR, zu neigen. Bei im Wesentlichen liegendem Erntegut sind die Haspelzinken 12 dafür vorgesehen, das liegende Erntegut, auch als Lagergetreide bezeichnet, anzuheben, um ein Schneiden und Aufnehmen durch das Vorsatzgerät 4 zu vereinfachen.

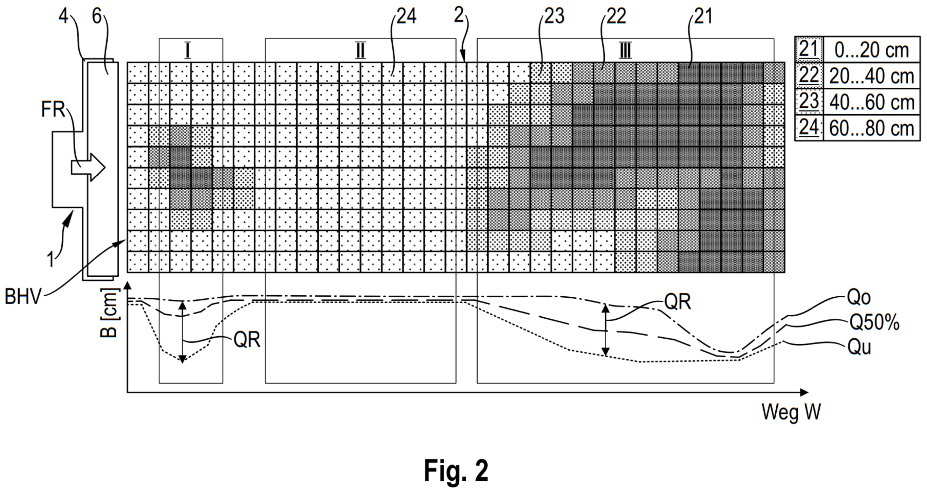

Der Bestand 2 weist eine Bestandshöhe B auf, die in Abhängigkeit von Witterungseinflüssen, der Geländetopologie des Feldes 3, Erntegutparametern, wie Bestandsdichte, Wuchshöhe oder dergleichen, sowie sonstigen Einflussparametern variieren kann. Die Variation in der Bestandshöhe B führt, in Draufsicht auf das Feld 3, zu einem unregelmäßigen Verlauf eines Oberflächenprofils 13, was in Fig. 2 veranschaulicht ist. Das Oberflächenprofil 13 wird nachfolgend auch als Ährenhorizontprofil bezeichnet.

Eine Haspelhöhe h bezeichnet den Abstand zwischen dem Boden des Feldes 3 und den Haspelzinken 12, wenn diese den geringsten vertikalen Abstand zum Boden aufweisen. Die Haspelhöhe h ist durch eine Ansteuerung der Linearaktoren 8 veränderbar, um auf Schwankungen in der Bestandshöhe B reagieren zu können. Mit hₒ ist ein variabler Offsetwert bezeichnet, welcher einen Differenzabstand zwischen der gemäß dem Verfahren eingestellten Haspelhöhe h und dem Oberflächenprofil 13 wiedergibt. Der Offsetwert hₒ bestimmt die Intensität eines Haspeleingriffs. Der Offsetwert hₒ wird in Abhängigkeit von der eingestellten Haspelhöhe h bestimmt und verwendet. Der Offsetwert hₒ kann sowohl positive als auch negative Werte annehmen.

Der Mähdrescher 1 weist zumindest eine Sensorvorrichtung 14 zur vorausschauenden Detektion der Bestandshöhe B auf. Die zumindest eine Sensorvorrichtung 14 ist bevorzugt am Dach einer Kabine des Mähdreschers 1 angeordnet. Alternativ oder zusätzlich kann eine maschinenunabhängige Vorrichtung 15 vorgesehen sein, welche beispielsweise als Drohne oder dergleichen ausgeführt ist, welche den Mähdrescher 1 während der Erntefahrt begleitet. Dabei kann die zumindest eine Sensorvorrichtung 14 zur Vorfelddetektion von der maschinenunabhängigen Vorrichtung 15 mitgeführt werden. Die zumindest eine Sensorvorrichtung 14 zur Vorfelddetektion kann z.B. als Lidar, Radar und/oder Kamera ausgebildet sein.

Die zumindest eine Sensorvorrichtung 14 und/oder die maschinenunabhängige Vorrichtung 15 überträgt bzw. übertragen Signale der zumindest einen Sensorvorrichtung 14 an eine Datenverarbeitungsvorrichtung 16. Hierbei kann die zumindest eine Sensorvorrichtung 14 und/oder die maschinenunabhängige Vorrichtung 15 Signale mittels drahtgebundener oder drahtloser Kommunikation an die Datenverarbeitungsvorrichtung 16 übertragen.

Die Datenverarbeitungsvorrichtung 16 umfasst eine Speichereinheit 17, eine Recheneinheit 18 sowie eine Benutzerschnittstelle 19. Durch die Datenverarbeitungsvorrichtung 16 wird in Abhängigkeit von einer durch die zumindest eine Sensorvorrichtung 14 vorausschauend detektierten Bestandshöhe B und Auswertung von die Bestandshöhe B wiedergebenden Signalen eine eingestellte Haspelhöhe h adaptiert. Hierzu kann die Datenverarbeitungsvorrichtung 16 die Linearaktoren 8 mittels geeigneter Steuersignale ansteuern. Alternativ kann die Datenverarbeitungsvorrichtung 16 mit einer Steuerungsvorrichtung 20 des Mähdreschers 1 in Verbindung stehen, welche unter anderem die Linearaktoren 8 ansteuert. Dabei kann die Datenverarbeitungsvorrichtung 16 entsprechende Daten an die Steuerungsvorrichtung 20 übertragen, welche daraus Steuersignale zur Ansteuerung der Linearaktoren 8 generiert. Weiterhin kann die Datenverarbeitungsvorrichtung 16 auch Bestandteil der Steuerungsvorrichtung 20 sein.

Die Darstellung in Fig. 2 zeigt schematisch und exemplarisch eine Bestandshöhenverteilung BHV des von der zumindest einen Sensorvorrichtung 14 im Vorfeld des Mähdreschers 1 zu detektierenden Bestandes 2, die sich aus dem sensorisch detektierten Oberflächenprofil 13 ergibt.

Der Mähdrescher 1, das Vorsatzgerät 4 sowie die Haspel 6 sind lediglich schematisch angedeutet. Ein Erfassungsbereich der zumindest einen Sensorvorrichtung 14 ist hier beispielhaft auf die Arbeitsbreite der Haspel 6 beschränkt dargestellt. Der auf dem Feld 3 befindliche Bestand 2 ist in eine Vielzahl von einzelnen Segmenten 21, 22, 23, 24 unterteilt. Die einzelnen Segmente 21, 22, 23, 24 unterscheiden sich dabei in der detektierten Bestandshöhe B voneinander, was durch unterschiedliche Schraffuren kenntlich gemacht ist. Mittels der Bestandshöhenverteilung BHV, die sich aus der Anordnung und Anzahl der einzelnen Segmente 21, 22, 23, 24 ergibt, wird der Verlauf des Oberflächenprofils 13 respektive des Ährenhorizontprofils bestimmt.

Die Segmente 21 umfassen Bereiche des Bestandes 2, in denen die detektierte Bestandshöhe B beispielsweise zwischen 0 cm und 20 cm liegt. Die Segmente 21 bilden das Auftreten von Lagergetreide ab.

Die Segmente 22 umfassen Bereiche des Bestandes 2, in denen die detektierte Bestandshöhe B beispielsweise zwischen 20 cm und 40 cm liegt. Die Segmente 22 können Bestandsbereiche mit geringer Wuchshöhe abbilden.

Die Segmente 23 umfassen Bereiche des Bestandes 2, in denen die detektierte Bestandshöhe B beispielsweise zwischen 40 cm und 60 cm liegt.

Die Segmente 24 umfassen Bereiche des Bestandes 2, in denen die detektierte Bestandshöhe B beispielsweise zwischen 60 cm und 80 cm liegt.

Die Wertebereiche der Bestandshöhen B in den unterschiedlichen Segmenten 21, 22, 23, 24 sind beispielhaft zu verstehen und können, ebenso wie die Anzahl der zur Charakterisierung der Bestandshöhen B verwendeten Segmente 21, 22, 23, 24 variieren bzw. variiert werden, um eine Anpassung an unterschiedliche Randbedingungen zu ermöglichen. Eine solche Randbedingung ist beispielsweise die Erntegutart, die wiederum für eine durchschnittliche Bestandshöhe maßgeblich ist.

In Fig. 2 sind drei Bereiche I, II, III exemplarisch durch diese umgebende Rahmen hervorgehoben und voneinander abgegrenzt dargestellt. Die drei Bereiche I, II, III dienen der Veranschaulichung unterschiedlicher Betriebssituationen, die auf unterschiedliche Bestandshöhenverteilungen BHV zurückgehen.

Der Bereich I weist einen Bestand 2 auf, welcher sich durch einen im Wesentlichen kleinteiligen Anteil an Lagergetreide auszeichnet, wie die je drei Segmente 21 und 22 veranschaulichen sollen.

Der Bereich II weist einen Bestand 2 auf, welcher sich durch eine im Wesentlichen gleichmäßige Bestandshöhe B auszeichnet, was durch die Segmente 24 verdeutlicht wird.

Der Bereich III weist einen Bestand 2 auf, welcher sich im dargestellten Ausführungsbeispiel durch einen großflächigen Anteil an Lagergetreide auszeichnet, was durch eine höhere Anzahl an Segmenten 21 verdeutlicht wird. Zudem weist der Bestand 2 im Bereich III aufgrund der Segmente 22 mit niedriger Bestandshöhe B einen inhomogenen Verlauf des Oberflächenprofils 13 auf. Das Oberflächenprofil 13 bzw. das Ährenhorizontprofil ist somit unregelmäßiger, als das im Bereich I und insbesondere der im Bereich II.

Die Haspelhöhe h wird beim Einfahren in den Bestand 2 entsprechend der Bestandshöhe B und des oberen Quantils Qo auf einen Wert voreingestellt. Im Verlauf des Erntevorgangs kann sich die Bestandshöhe B ändern, was die Adaption der eingestellten Haspelhöhe h erfordert. Die Adaption soll automatisch erfolgen, um den Bediener des Mähdreschers 1 zu entlasten. Durch die Automatisierung der Höhensteuerung der Haspel 6 kann die Bearbeitungsqualität durch das Vorsatzgerät 4 verbessert werden, da eine präzisere Anpassung erreicht wird, als dies durch eine manuelle Anpassung der Haspelhöhe h möglich ist.

Das in den Figuren dargestellte und insoweit bevorzugte Ausführungsbeispiel betrifft ein Verfahren zur automatischen Höhensteuerung der in vertikaler und horizontaler Richtung verstellbaren Haspel 6 des Vorsatzgerätes 4, wobei in Abhängigkeit von einer durch die zumindest eine Sensorvorrichtung 14 vorausschauend detektierten Bestandshöhe B und Auswertung von die Bestandshöhe B wiedergebenden Signalen durch die Datenverarbeitungsvorrichtung 16 die eingestellte Haspelhöhe h adaptiert wird. Das Verfahren sieht erfindungsgemäß vor, dass zur automatischen Höhensteuerung das Oberflächenprofil 13 des Bestands B vorausschauend detektiert wird. Der Datenverarbeitungsvorrichtung 16 werden durch die zumindest eine Sensorvorrichtung 14 das detektierte Oberflächenprofil 13 wiedergebende Signale zur Bestimmung zumindest zweier Quantile zugeführt. Durch eine statistische Analyse werden ein unteres Quantil Qu und ein oberes Quantil Qo als zumindest zwei Quantile bestimmt. Die Anpassung der einzustellenden Haspelhöhe h wird in Abhängigkeit vom Quantilsabstand QR der zumindest zwei Quantile Qu, Qo bestimmt. Je geringer dabei der Quantilsabstand QR ist, umso gleichmäßiger ist die Bestandshöhe B, d.h. das Oberflächenprofil 13 ist im Wesentlichen eben. Dort wo die Verläufe der zumindest zwei Quantile Qu, Qo auseinanderlaufen und der Quantilsabstand QR entsprechend groß wird, handelt es sich um unebene Bestände.

Unterhalb der exemplarischen Darstellung der Bestandshöhenverteilung BHV ist in Fig. 2 weiterhin ein mit der Bestandshöhenverteilung BHV korrespondierendes Diagramm dargestellt. Das Diagramm zeigt das Ergebnis der statistischen Auswertung der Bestandshöhe B und des sich daraus ergebenden Oberflächenprofiles 13 über die drei Bereiche I, II, III des Feldes 3 hinweg.

Dem oberen Quantil Qo ist ein Quantilwert zugewiesen, der oberhalb eines 50%-Quantils Q50% liegt. Das 50%-Quantils Q50% wird ebenfalls durch eine statistische Analyse der das detektierte Oberflächenprofil 13 wiedergebenden Signale bestimmt. Dem unteren Quantil Qu ist ein Quantilwert zugewiesen, der unterhalb des 50%-Quantils Q50% liegt. Im dargestellten Ausführungsbeispiel ist dem oberen Quantil Qo beispielhaft ein Quantilwert von 90% und dem unteren Quantil Qu ein Quantilwert von 30% zugewiesen. Die verwendeten Werte der zumindest zwei Quantile Qu, Qo sind dabei nicht statisch, sondern können beispielsweise durch eine Bedienereingabe mittels der Benutzerschnittstelle 19 verändert werden.

Insbesondere wird in Abhängigkeit vom Überschreiten zumindest eines Schwellwertes SW1 für den Quantilsabstand QR die Anpassung der einzustellenden Haspelhöhe h angesteuert. Der zumindest eine Schwellwert SW1 im Quantilsabstand OR kann mittels der Benutzerschnittstelle 19 durch den Bediener angepasst werden. Dabei kann es sich zum Beispiel um eine Empfindlichkeitsverstellung handeln. Somit kann das Verfahren zur automatischen Höhensteuerung durch eine Adaption des zumindest einen Schwellwertes SW1 an individuelle Wünsche des Bedieners des Mähdreschers 1 angepasst werden. Alternativ kann die Bestimmung des zumindest einen Schwellwertes SW1 durch einen in der Datenverarbeitungsvorrichtung 16 hinterlegten oder hinterlegbaren Algorithmus erfolgen, welcher den zumindest einen Schwellwert SW1 für den Quantilsabstand QR durch maschinelles Lernen bestimmt und anpasst. Dabei kann der Algorithmus den zumindest einen Schwellwert SW1 automatisch lernen, indem der Quantilsabstand QR und gleichzeitig ein manueller Eingriff des Bedieners zur Änderung der Haspelposition durch manuelles Übersteuern beobachtet werden. Abhängig von der Häufigkeit pro Zeitintervall und der Intensität des manuellen Eingriffs kann die Adaption des zumindest einen Schwellwertes SW1 angepasst erfolgen. Im Falle einer adaptiven Ausführung der Bestimmung des zumindest einen Schwellwertes SW1 durch ein Maschinenlernmodell können die adaptierten Parameter mittels der Benutzerschnittstelle 19 auf Werkseinstellung zurückgesetzt werden. Dies kann zum Beispiel durch das Laden von Fruchtarten und den damit verknüpften Schwellwerten SW1 erfolgen.

Wie aus Fig. 2 ersichtlich, stellt sich im Bereich I ein Quantilsabstand QR zwischen dem oberen Quantil Qo und dem unteren Quantil Qu ein, der den zumindest einen, insbesondere einstellbaren, Schwellwert SW1 überschreitet. Dabei wird im Bereich I der große Quantilsabstand QR im Wesentlichen durch die Differenz zwischen dem 50%-Quantil Q50% und dem unteren Quantil Qu als unterem Quantilsabstand QRu bestimmt. Die Differenz zwischen dem oberen Quantil Qo und dem 50%-Quantil Q50% als oberen Quantilsabstand QRo ist hingegen sehr gering. Hierdurch wird die Kleinteiligkeit der vorhandenen Segmente 21 mit Lagergetreide im Bereich I des Feldes 3 charakterisiert. Eine Anpassung der Haspelhöhe h durch eine Ansteuerung der Linearaktoren 8 durch die Datenverarbeitungsvorrichtung 16 ist nicht notwendig, da das kleinteilige Lagergetreide vom angrenzenden stehenden Getreide in den Segmenten 22, 23, 24 mitgefördert wird. Daher verbleibt die eingestellte Haspelhöhe h auf dem Niveau des oberen Quantils Qo, um nicht auf das kleinteilige Lagergetreide in den Segmenten 21 zu reagieren.

Im Bereich II gemäß Fig. 2 stellt sich ein Quantilsabstand QR zwischen dem oberen Quantil Qo und dem unteren Quantil Qu ein, der den zumindest einen Schwellwert SW1 nicht überschreitet. Vielmehr weisen das obere Quantil Qo und das untere Quantil Qu einen zum 50%-Quantil Q50% annähernd parallelen Verlauf auf. Da die Verläufe des oberen Quantils Qo, des unteren Quantils Qu sowie des 50%-Quantils Q50% in diesem Falle sehr ähnlich ausfallen ist es nahezu unerheblich welches der Quantile der Einstellung der Haspelhöhe h zugrunde liegt.

Im Bereich III gemäß Fig. 2 stellt sich ein Quantilsabstand QR zwischen dem oberen Quantil Qo und dem unteren Quantil Qu ein, der den zumindest einen Schwellwert SW1 überschreitet. Im Unterschied zu den Verläufen des oberen Quantils Qo und des untere Quantils Qu im Bereich I weisen die Verläufe der beiden Quantile Qu, Qo im Bereich III eine ähnlich große Differenz zum 50%-Quantil Q50% auf. Hierdurch wird das Auftreten einer großen Fläche mit Lagergetreide entsprechend der vorhandenen Segmente 21 mit Lagergetreide im Bereich III des Feldes 3 charakterisiert. Dies deutet auf massiv unebene Bestände hin und die Haspel 6 muss bis zum Lagergetreide abgesenkt werden, um die Förderung zu unterstützen. Vorteilhaft ist in dieser Situation die Verwendung des unteren Quantils Qu zur Einstellung der Haspelhöhe h.

Bevorzugt kann die Anpassung der Haspelhöhe h in Abhängigkeit von zumindest einer Erntebedingung durchgeführt werden, wobei die zumindest eine Erntebedingung aus der Gruppe Lagergetreidebereich, Lagergetreideintensität, Lagerorientierung, Bestandsdichte und/oder Geländetopologie ist. Dabei beschreibt der Lagergetreidebereich die Lage, Form und/oder Ausdehnung des Bereichs mit Lagergetreide innerhalb des Bestands 2, der sich innerhalb des Detektionsbereichs der zumindest einen Sensorvorrichtung 14 befindet. Eine geringe Bestandsdichte kann ebenfalls die Bestandshöhe B des aufzunehmenden Erntegutes beeinflussen.

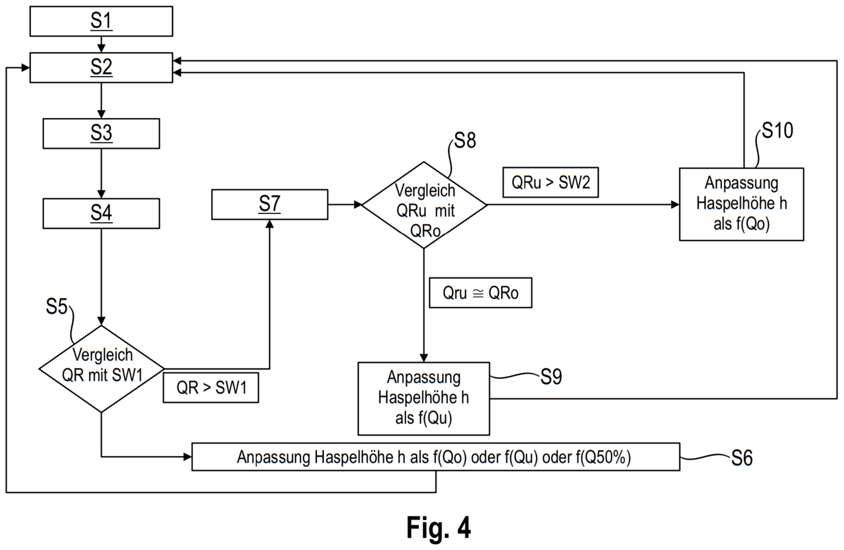

In Fig. 4 ist exemplarisch ein Verlauf einer adaptiven Einstellung der Haspelhöhe h dargestellt. Ein von dem Mähdrescher 1 zurückgelegter Weg W ist beispielhaft in drei Wegabschnitte W1, W2 und W3 unterteilt, welche unterschiedliche Erntebedingungen veranschaulichen sollen, die zu einer Anpassung der Einstellung der Haspelhöhe h führen.

Der Offsetwert h₀ für den Haspeleingriff wird in Abhängigkeit von der Haspelhöhe h bestimmt und eingestellt.

Im Wegabschnitt W1 liegt beispielhaft eine Situation vor, die eine geringere Intensität des Haspeleingriffs erfordert. Eine Anhebung der Haspelhöhe h aufgrund von Bestandshöhen B, die signifikant vom 50%-Quantil Q50% nach oben abweichen, kann zur einer temporären Erhöhung der Haspelhöhe h um den Offsetwert h₀ führen, d.h. die Intensität des Haspeleingriffs wird verringert.

Im Wegabschnitt W2 liegt beispielhaft eine Situation vor, die eine verstärkte Intensität des Haspeleingriffs erfordert. Eine Absenkung der einzustellenden Haspelhöhe h aufgrund geringer Bestandshöhen B im Vorfeld kann zu einer temporären Reduzierung der Haspelhöhe h um den Offsetwert h₀ führen, d.h. der Haspeleingriff wird verstärkt.

Im Wegabschnitt W3 liegt beispielhaft eine Situation vor, in welcher die Bestandshöhe B sehr homogen ist. Die Bestandshöhe B liegt im Wesentlichen im Bereich des 50%-Quantils Q50%. In dieser Situation kann der Offsetwert h₀ den Wert Null haben, da eine Verringerung oder Verstärkung des Haspeleingriffs nicht erforderlich ist.

Des Weiteren kann die Einstellung des Haspeleingriffs in Abhängigkeit von zumindest einer der Erntebedingungen durchgeführt werden. So kann in Abhängigkeit von zumindest einer Erntebedingung aus der Gruppe Lagergetreidebereich, Lagergetreideintensität, Lagerorientierung, Bestandsdichte und/oder Geländetopologie der Offsetwert h₀ auf die in Abhängigkeit von der Erntebedingung bestimmten und Haspelhöhe h aufaddiert oder von dieser subtrahiert werden.

Weiter bevorzugt kann der Haspeleingriff in Abhängigkeit von einer durch einen Neigungssensor detektierten Neigung des Vorsatzgerätes 6 verändert werden. Dadurch kann der Haspeleingriff insbesondere bei einer Neigung des Vorsatzgerätes 6, die sich bei einer Berg- oder Talfahrt einstellt, der Haspeleingriff durch die automatische Veränderung der Haspelhöhe h angepasst werden. In der beispielhaft genannten Situation der Talfahrt ist es sinnvoll, den Haspeleingriff geringfügig zu verstärken, so dass aufrechtstehende, höhere Pflanzen aktiver dem Vorsatzgerät 4 zugeführt und besser an Förderorgane des Vorsatzgerätes 4 gedrückt werden. Eine Berg- oder Talfahrt kann beispielsweise durch einen dem Mähdrescher 1 zugeordneten Neigungssensor detektiert werden.

Die Darstellung in Fig. 4 zeigt schematisch ein Ablaufdiagramm der automatischen Haspelhöhensteuerung.

Im Schritt S1 wird zu Beginn des Erntevorgangs die Haspelhöhe h voreingestellt. Diese kann auf der erstmaligen Detektion der Bestandshöhe B zu Beginn des Erntevorgangs basieren. Alternativ kann die Haspelhöhe h manuell durch den Bediener des Mähdreschers 1 oder auf einen für das zu bearbeitende Feld 3 in der Speichereinheit 17 hinterlegten Wert für die Haspelhöhe h voreingestellt werden. Die voreingestellt Haspelhöhe h ist dabei durch die Erntegutart bestimmt.

Im Schritt S2 wird die Bestandshöhe B durch die zumindest eine Sensorvorrichtung 14 kontinuierlich detektiert. Die die Bestandshöhe B wiedergebenden Signalen werden der Datenverarbeitungsvorrichtung 16 zur Auswertung zugeführt.

Im Schritt S3 werden das untere Quantil Qu und das obere Quantil Qo durch statistische Analyse mittels der Datenverarbeitungsvorrichtung 16 bestimmt.

Im Schritt S4 wird der Quantilsabstand QR als Differenz zwischen dem unteren Quantil Qu und dem oberen Quantil Qo bestimmt.

Im Schritt S5 wird der bestimmte Quantilsabstand QR mit dem ersten Schwellwert SW1 verglichen, um in Abhängigkeit vom Vergleichsergebnis zu entscheiden, ob und in welcher Form eine Anpassung der Haspelhöhe h erforderlich ist.

Liegt der Quantilsabstand QR im innerhalb des durch zwei, insbesondere vorgebbare, Grenzwerte begrenzten Toleranzbandes um das 50%-Quantil, wird zum Schritt S6 verzweigt.

Im Schritt S6 wird für die Anpassung der einzustellenden Haspelhöhe h bevorzugt das 50%-Quantil oder alternativ das untere Quantil Qu oder das obere Quantil Qo verwendet.

Überschreitet der Quantilsabstand QR den Schwellwert SW1, wird zum Schritt S7 verzweigt. Im Schritt S7 werden der Quantilsabstand QRo zwischen dem oberen Quantil Qo und dem 50%-Quantil und der Quantilsabstand QRu zwischen dem 50%-Quantil und dem unteren Quantil Qu bestimmt.

Im Schritt S8 werden der bestimmte obere Quantilsabstand QRo und der untere Quantilsabstand QRu miteinander verglichen. In Abhängigkeit vom Vergleichsergebnis im Schritt S8 wird zum Schritt S9 oder S10 übergegangen.

Ergibt das Vergleichsergebnis im Schritt S8, dass der Quantilsabstand QRo und der Quantilsabstand QRu annähernd gleich groß sind, wird zum Schritt S9 übergegangen. Im Schritt S9 wird die automatische Anpassung der Haspelhöhe h in Abhängigkeit vom unteren Quantil Qu durchgeführt.

Ergibt das Vergleichsergebnis im Schritt S8, dass der Quantilsabstand QRu größer als der Quantilsabstand QRo ist, wird zum Schritt S10 übergegangen. Im Schritt S10 wird die automatische Anpassung der Haspelhöhe h in Abhängigkeit vom oberen Quantil Qo durchgeführt.

**Bezugszeichenliste**

| | | | |
|---|---|---|---|
| 1 | Mähdrescher | QRo | Oberer Quantilsabstand |
| 2 | Bestand | QRu | Unterer Quantilsabstand |
| 3 | Feld | Q50% | 50%-Quantil |
| 4 | Vorsatzgerät | SW1 | Schwellwert |
| 5 | Einzugskanal | SW2 | Schwellwert |
| 6 | Haspel | W | Weg |
| 7 | Haspeltragarm | W1 | Wegabschnitt |
| 8 | Linearaktor | W2 | Wegabschnitt |
| 9 | Haspeltragrohr | W3 | Wegabschnitt |
| 10 | Haspelstern | | |
| 11 | Zinkenstange | | |
| 12 | Haspelzinke | | |
| 13 | Oberflächenprofil | | |
| 14 | Sensorvorrichtung | | |
| 15 | Maschinenunabhängige Vorrichtung | | |
| 16 | Datenverarbeitungsvorrichtung | | |
| 17 | Speichereinheit | | |
| 18 | Recheneinheit | | |
| 19 | Benutzerschnittstelle | | |
| 20 | Steuerungsvorrichtung | | |
| 21 | Segment | | |
| 22 | Segment | | |
| 23 | Segment | | |
| 24 | Segment | | |
| B | Bestandshöhe | | |
| BHV | Bestandshöhenverteilung | | |
| FR | Fahrtrichtung | | |
| h | Haspelhöhe | | |
| h₀ | Offsetwert | | |
| Qo | Oberes Quantil | | |
| Qu | Unteres Quantil | | |
| QR | Quantilsabstand | | |

## Patentansprüche

1. Verfahren zur automatischen Höhensteuerung einer in vertikaler und horizontaler Richtung verstellbaren Haspel (6) eines Vorsatzgerätes (4) für einen selbstfahrenden Mähdrescher (1), wobei in Abhängigkeit von einer durch zumindest eine Sensorvorrichtung (14) vorausschauend detektierten Bestandshöhe (B) eines Bestands (2) und Auswertung von die Bestandshöhe (B) wiedergebenden Signalen durch eine Datenverarbeitungsvorrichtung (16) eine eingestellte Haspelhöhe (h) adaptiert wird, **dadurch gekennzeichnet, dass** zur automatischen Höhensteuerung ein Oberflächenprofil (13) des Bestands (2) vorausschauend detektiert wird, dass das Oberflächenprofil (13) wiedergebende Signale zur Bestimmung zumindest zweier Quantile, eines unteren Quantils (Qu) und eines oberen Quantils (Qo), der der Datenverarbeitungsvorrichtung (16) zur Durchführung einer statistischen Analyse zugeführt werden, und dass die Anpassung der einzustellenden Haspelhöhe (h) in Abhängigkeit vom Quantilsabstand (QR) der zumindest zwei Quantile (Qu, Qo) bestimmt wird.

2. Verfahren nach Anspruch 1, **dadurch gekennzeichnet, dass** in Abhängigkeit vom Überschreiten zumindest eines Schwellwertes (SW1) für den Quantilsabstand (QR) die Anpassung der einzustellenden Haspelhöhe (h) angesteuert wird.

3. Verfahren nach Anspruch 1 oder 2, **dadurch gekennzeichnet, dass** dem oberen Quantil (Qo) ein Quantilwert zugewiesen ist, der oberhalb eines 50%-Quantils (O50%) liegt, und dass dem unteren Quantil (Qu) ein Quantilwert zugewiesen ist, der unterhalb des 50%-Quantils (Q50%) liegt.

4. Verfahren nach einem der Ansprüche 1 bis 3, **dadurch gekennzeichnet, dass** der zumindest eine Schwellwert (SW1) für den Quantilsabstand (QR) manuell, insbesondere durch eine Eingabe mittels einer Benutzerschnittstelle (19), oder automatisiert, insbesondere durch ein Maschinenlernmodell, angepasst wird.

5. Verfahren nach einem der vorangehenden Ansprüche, **dadurch gekennzeichnet, dass** die Anpassung der Haspelhöhe (h) in Abhängigkeit von zumindest einer Erntebedingung durchgeführt wird, wobei die zumindest eine Erntebedingung aus der Gruppe Lagergetreidebereich, Lagergetreideintensität, Lagerorientierung und/oder Geländetopologie ist.

6. Verfahren nach einem der vorangehenden Ansprüche, **dadurch gekennzeichnet, dass** ein Offsetwert (hₒ) für die eingestellte Haspelhöhe (h) bestimmt und auf die eingestellte Haspelhöhe (h) angewendet wird, um in Abhängigkeit von der Haspelhöhe (h) die Intensität eines Haspeleingriffs einzustellen.

7. Verfahren nach Anspruch 6, **dadurch gekennzeichnet, dass** die Einstellung des Haspeleingriffs in Abhängigkeit von zumindest einer der Erntebedingungen durchgeführt wird.

8. Verfahren nach Anspruch 6 oder 7, **dadurch gekennzeichnet, dass** der Haspeleingriff in Abhängigkeit von einer durch einen Neigungssensor detektierten Neigung des Vorsatzgerätes (4) verändert wird.

9. Verfahren nach einem der Ansprüche 2 bis 8, **dadurch gekennzeichnet, dass** zur Beurteilung der Gleichmäßigkeit des Oberflächenprofils (13) der Quantilsabstand (QR) zwischen dem oberen Quantil (Qo) und dem unteren Quantil (Qu) bestimmt und mit dem zumindest einen Schwellwert (SW1) für den Quantilsabstand (QR) verglichen wird.

10. Verfahren nach einem der Ansprüche 3 bis 9, **dadurch gekennzeichnet, dass** bei einer im Wesentlichen gleichen Bestandshöhe (B), bei welcher der Quantilsabstand (QR) innerhalb eines durch zwei Grenzwerte begrenzten Toleranzbandes um das 50%-Quantil (Q50%) liegt, das 50%-Quantil (Q50%), das untere Quantil (Qu) oder das obere Quantil (Qo) zur Anpassung der einzustellenden Haspelhöhe (h) verwendet wird.

11. Verfahren nach einem der Ansprüche 3 bis 10, **dadurch gekennzeichnet, dass** bei einem Überschreiten des zumindest einen Schwellwertes (SW1) für den Quantilsabstand (QR) zwischen dem oberen Quantil (Qo) und dem unteren Quantil (Qu) ein oberer Quantilsabstand (QRo) zwischen dem oberen Quantil (Qo) und dem 50%-Quantil (Q50%) mit einem unteren Quantilsabstand (QRu) zwischen dem 50%-Quantil (Q50%) und dem unteren Quantil (Qu) bestimmt und verglichen wird.

12. Verfahren nach Anspruch 11, **dadurch gekennzeichnet, dass** aus dem Vergleich des Quantilsabstands (QR) zwischen dem oberen Quantilsabstand (QRo) und dem unteren Quantilsabstand (QRu) auf die Gleichmäßigkeit des Oberflächenprofils (13) des Bestands (2) geschlossen wird.

13. Verfahren nach Anspruch 11 oder 12, **dadurch gekennzeichnet, dass** bei einem Überschreiten des Schwellwertes (SW1) für den Quantilsabstand (QR) der obere Quantilsabstand (QRo) und der untere Quantilsabstand (QRu) miteinander verglichen werden, wobei bei einer annähend gleichen Größe des oberen Quantilsabstands (QRo) und des unteren Quantilsabstands (QRu) das untere Quantil (Qu) zur Anpassung der einzustellenden Haspelhöhe (h) verwendet wird.

14. Verfahren nach Anspruch 11 oder 12, **dadurch gekennzeichnet, dass** bei einem Überschreiten eines weiteren Schwellwertes (SW2) durch den bestimmten unteren Quantilsabstand (QRu) das obere Quantil (Qo) zur Anpassung der einzustellenden Haspelhöhe (h) verwendet wird.

15. Selbstfahrender Mähdrescher (1) mit einem Vorsatzgerät (4), welches eine in vertikaler und horizontaler Richtung verstellbare Haspel (6) umfasst, sowie mit einer Datenverarbeitungsvorrichtung (16), welche dazu eingerichtet ist, von zumindest einer Sensorvorrichtung (14) eine vorausschauend detektierte Bestandshöhe (B) zur Auswertung von die Bestandshöhe (B) wiedergebende Signalen zu empfangen und auszuwerten, um in Abhängigkeit von der detektierten Bestandshöhe (B) eine eingestellte Haspelhöhe (h) zu adaptieren, **dadurch gekennzeichnet, dass** der Mähdrescher (1) zur Durchführung des Verfahrens nach einem der Ansprüche 1 bis 14 eingerichtet ist.
